# EUROPEAN PATENT SPECIFICATION

(11) **EP 1 146 203 B1**
(45) Date of publication and mention of the grant of the patent: **08.03.2006**
(21) Application number: 00310882.6
(22) Date of filing: 07.12.2000
(51) Int. Cl.: F01D 9/04, F01D 25/12, F01D 5/18

(54) **Impingement cooling of an undercut region of a turbine nozzle segment**
Prallkühlung eines hinterschnittenen Bereichs bei Turbinenleitapparaten
Refroidissement d'une région contre-dépouillée d'un secteur d'une tuyère de guidage pour turbines

(30) Priority: 11.04.2000 US 546766
(43) Date of publication of application: 17.10.2001
(73) Proprietor: GENERAL ELECTRIC COMPANY, Schenectady, NY 12345 (US)
(72) Inventor: Burdgick, Steven Sebastian, Schenectady, New York 12303 (US)
(74) Representative: Pedder, James Cuthbert

(56) References cited:
- US-A- 4 017 207
- US-A- 5 743 708
- US-A- 5 823 741

## Description

The present invention relates to impingement cooling of a gas turbine nozzle band side wall adjacent an undercut region of a nozzle segment and particularly relates to impingement cooling of the nozzle band side wall in a design where the weld joint between the nozzle segment cover and the nozzle side wall is remote from the nozzle wall exposed to the hot gas path.

US 5,743,708 discloses turbine stator vane segments having combined air and steam cooling circuits

In current gas turbine designs, nozzle segments are typically arranged in an annular array about the rotary axis of the turbine. The array of segments forms outer and inner annular bands and a plurality of vanes extend between the bands. The bands and vanes define in part the hot gas path through the gas turbine. Each nozzle segment comprises an outer band portion and an inner band portion and one or more nozzle vanes extend between the outer and inner band portions. In current gas turbine designs, a cooling medium, for example, steam, is supplied to each of the nozzle segments. To accommodate the steam cooling, each band portion includes a nozzle wall in part defining the hot gas path through the turbine, a cover radially spaced from the nozzle wall defining a chamber therewith and an impingement plate disposed in the chamber. The impingement plate defines with the cover a first cavity on one side thereof for receiving cooling steam from a cooling steam inlet. The impingement plate also defines, along an opposite side thereof and with the nozzle wall, a second cavity. The impingement plate has a plurality of apertures for flowing the cooling steam from the first cavity into the second cavity for impingement cooling the nozzle wall. The cooling steam then flows radially inwardly through cavities in the vane(s), certain of which include inserts with apertures for impingement cooling the side walls of the vane. The cooling steam then enters a chamber in the inner band portion and reverses its flow direction for flow radially outwardly through an impingement plate for impingement cooling the nozzle wall of the inner band. The spent cooling medium flows back through a cavity in the vane to an exhaust port of the nozzle segment.

The cover provided each of the outer and inner band portions is preferably welded to the corresponding nozzle side wall. In prior designs, the weld joint between the cover and the nozzle wall was disposed at a radial location between the nozzle wall and the spline seal between side walls of adjacent nozzle segments. In that location, the weld joint was exposed to the high temperature gases in the hot gas flow path and the side wall was very difficult to cool. Thus, weld joint fatigue life was significantly reduced due to its proximity to the hot gas path. Moreover, the location of the weld was not optimum for manufacturing repeatability and was very sensitive to manufacturing tolerances. The weld joint was characterized by variable wall thicknesses which increased the stress at the joint, decreased the low cycle fatigue and limited the life of the parts. The wall thickness at the weld after machining was also a variable which could not be tolerated in the manufacturing process.

In accordance with a preferred embodiment of the present invention, a cooling system is provided in a nozzle segment design in which the weld joint between the cover and nozzle side wall is on the side of the spline seal remote from the nozzle wall exposed to the hot gas path. That is, the weld joint between the cover and the nozzle side wall of the outer band is located radially outwardly of the spline seal between adjacent outer bands while the weld joint between the cover and the nozzle side wall of the inner band is located radially inwardly of the spline seal between adjacent inner bands. This reduces the temperature of the weld joints during turbine operation, reduces the stresses across the joints, both thermal and mechanical, eliminates any requirement for machining after welding and results in joints of constant thickness and higher fatigue life. The location also leads to improved machinability and tolerance to weld defects.

To provide that weld location, undercut regions adjacent the side walls of each nozzle segment bands are formed. Particularly, each undercut region includes a side wall or edge of the nozzle segment and an inturned flange extending inwardly from and generally parallel to the nozzle wall (in the hot gas path) and spaced from the nozzle wall. Cooling the nozzle side wall or edge, however, is quite difficult in view of the undercut region which spaces the side wall or edge a substantial distance from the nearest apertures of the impingement plate. This substantial distance from the impingement cooling flow reduces the effectiveness of the cooling of the nozzle side wall. It is therefore very important to minimize the impingement distance, i.e., the distance between the apertures through the impingement plate and the surface to be cooled. It is also necessary to minimize that distance in a producible production nozzle segment.

In accordance with the present invention, improved side wall fabrication and cooling is provided. Particularly, with the weld joint between the cover and the nozzle side wall located remotely from the hot gas path through the turbine, side wall cooling is improved by providing the inturned flange of the nozzle side wall with a plurality of openings in which apertured cooling plates are received. The apertures through the plates extend between opposite edges of the plate. Consequently, by inserting the plate into openings along the inturned flange of the side wall, one edge of the plate lies in communication with the first cavity, while the opposite edge lies in communication with the second cavity. Most importantly, however, the ends of the cooling flow exit apertures lie very close to the side wall. Consequently, cooling medium flow from the first cavity through the apertures into the second cavity exits the apertures at locations directly adjacent the side wall of the nozzle to be cooled. The free flow of the cooling medium therefore travels a limited distance insufficient for the flow exiting the apertures to spread. Also, because the apertures are elongated, i.e., extend between opposite edges of the plate, the cooling medium flowing from the apertures onto the side wall is more directed and focused, thereby increasing cooling efficiency.

In a preferred embodiment according to the present invention, there is provided for use in a gas turbine, a nozzle segment having outer and inner band portions and at least one vane extending between the band portions, at least one of the band portions including a nozzle wall defining in part a hot gas path through the turbine, a cover radially spaced from the nozzle wall defining a chamber therebetween and an impingement plate disposed in the chamber defining with the cover a first cavity on one side thereof for receiving a cooling medium, the impingement plate on an opposite side thereof defining with the nozzle wall a second cavity, the impingement plate having a plurality of apertures therethrough for flowing cooling medium from the first cavity into the second cavity for impingement cooling the nozzle wall, the nozzle segment including a side wall extending generally radially between the nozzle wall and the cover, means carried by the segment having a plurality of apertures therethrough for flowing the cooling medium from the first cavity for impingement cooling the side wall of the nozzle segment.

In a further preferred embodiment according to the present invention, there is provided for use in a gas turbine, a nozzle segment having outer and inner band portions and at least one vane extending between the band portions, at least one of the band portions including a nozzle wall defining in part a hot gas path through the turbine, a cover radially spaced from the nozzle wall defining a chamber therebetween and an impingement plate disposed in the chamber defining with the cover a first cavity on one side thereof for receiving a cooling medium, the impingement plate on an opposite side thereof defining with the nozzle wall a second cavity, the impingement plate having a plurality of apertures therethrough for flowing cooling medium from the first cavity into the second cavity for impingement cooling the nozzle wall, the nozzle segment including a side wall extending generally radially between the nozzle wall and the cover and having an inturned flange defining an undercut region adjacent the side wall, the impingement plate having an edge secured to the inturned flange, the inturned flange having at least one slot therethrough between the first cavity and the undercut region, a plate disposed in the slot and extending into the undercut region, and a plurality of apertures passing through the plate for flowing the cooling medium from the first cavity into the undercut region for impingement cooling the side wall of the nozzle segment.

The invention will now be described in greater detail, by way of example, with reference to the drawings, in which:-
FIGURE 1 is an exploded perspective and schematic view of a nozzle segment constructed in accordance with a preferred embodiment of the present invention; and
FIGURE 2 is an enlarged fragmentary cross-sectional view illustrating a joint between side walls of adjacent nozzle segments further illustrating the location of the cover/nozzle casting weld joint and impingement cooling of the preferred embodiment hereof; and
FIGURE 3 is a perspective view of the apertured plate for nozzle side wall cooling in accordance with a preferred form of the present invention.

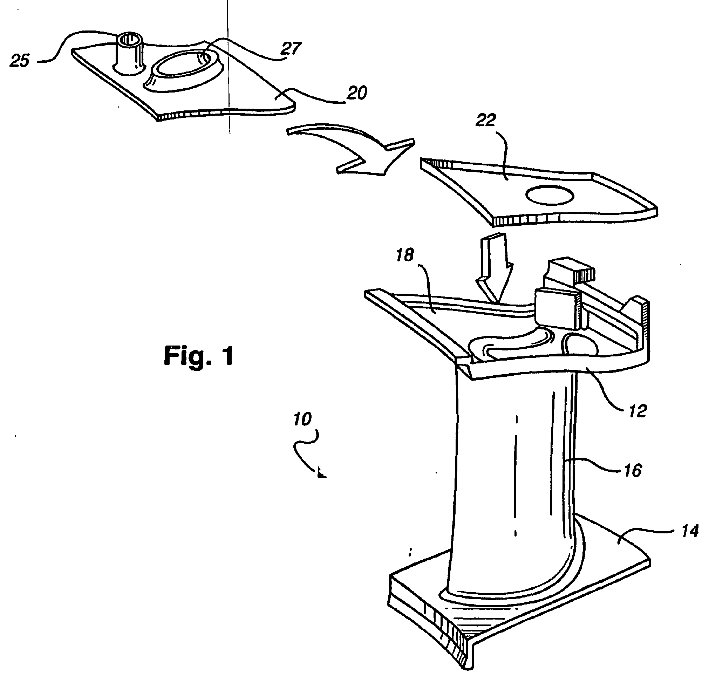

Referring now to Figure 1, there is illustrated a nozzle segment, generally designated 10, forming a part of an annular array of segments disposed about a gas turbine axis. Each nozzle segment includes an outer band 12, an inner band 14 and one or more vanes 16 extending therebetween. When the nozzle segments are arranged in the annular array, the outer and inner bands 12 and 14 and vanes 16 define an annular hot gas path through the gas turbine, as is conventional.

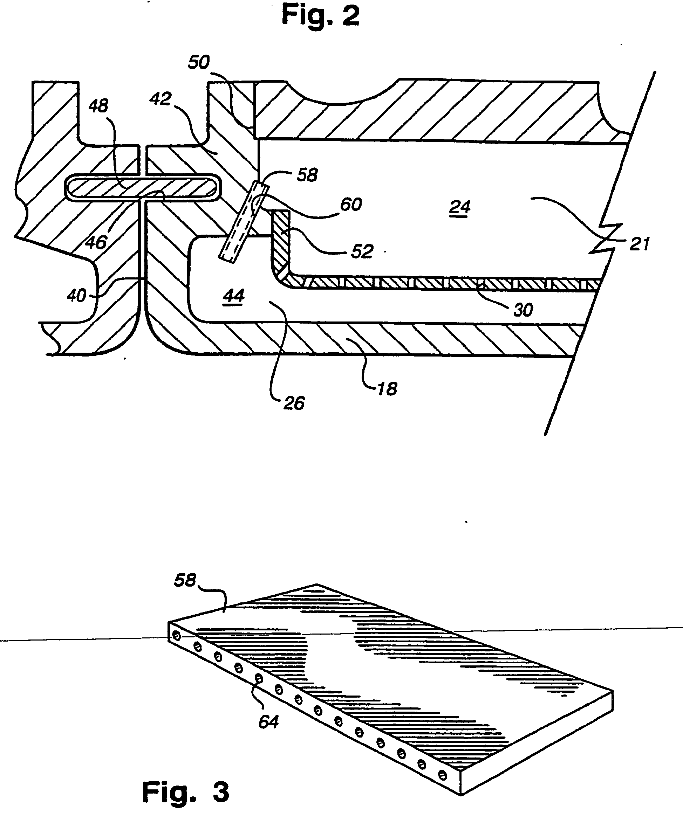

The outer and inner bands and the vanes are cooled by flowing a cooling medium, e.g., steam, through a chamber of the outer band 12, radially inwardly through cavities in the vanes, through a chamber in the inner band 14 and radially outwardly through the vanes for return of the cooling medium to an exit port along the outer band. More particularly and by way of example in Figure 1, the outer band 12 includes an outer nozzle wall 18, an outer cover 20 which is disposed over and welded to the outer wall 18 to define a chamber 21 (Figure 2) therebetween and an impingement plate 22 disposed in the chamber 21. The impingement plate 22 defines with the nozzle segment cover 20 a first cavity 24 and, on an opposite side thereof, defines with the nozzle wall 18 a second cavity 26. Cooling medium inlet and outlet ports 25 and 27, respectively, are provided through the cover for supplying the cooling medium, e.g., steam, to the nozzle vane segment and exhausting the spent cooling steam from the segment. The cooling steam is supplied to the first cavity 24 for passage through a plurality of apertures 30 in the impingement plate 22 for impingement cooling of the nozzle wall 18. The impingement cooling steam flows from the second cavity 26 into one or more inserts (not shown) in cavities extending through the vane between the outer and inner bands. The vane inserts include a plurality of apertures for impingement cooling of the side walls of the vane. The cooling steam then flows into the chamber of the inner band 14 and particularly into the radial innermost cavity for flow through apertures of an impingement plate in the inner band for impingement cooling the side wall of the inner band. The spent cooling steam then flows through a cavity in the vane and through the exhaust port of the outer band. For a complete description of an embodiment of the foregoing described cooling circuit, reference is made to U.S. Patent No. 5,634,766, of common assignee, the disclosure of which is incorporated herein by reference.

Referring now to Figure 2, there is illustrated a joint between adjacent nozzle segments. It will be appreciated that while the following description is specific with reference to the outer band 12, it is equally applicable to the inner band 14. Thus, each nozzle band (both inner and outer bands) includes a nozzle side wall or edge 40 which extends generally radially between the nozzle wall 18 and the cover 20. The band also includes an inturned flange 42 spaced from the nozzle wall 18 and defines with wall 18 and side wall or edge 40 an undercut region 44. The inturned flange 42 also includes a circumferentially opening slot 46 for receiving one edge of a spline 48 forming a seal between adjacent nozzle segments.

As illustrated in Figure 2, the covers 20 are welded to the inturned flanges 42 along opposite edges of the nozzle band. Also, the weld joint 50 lies on the side of the spline seal 48 remote from the nozzle wall 18. By locating the weld joint 50 away from the hot gas path defined in part by nozzle wall 18, the weld joint 50 is subjected to a much lower temperature than if located closer to the hot gas path. Also illustrated in Figure 2 is the impingement plate 22 which has a turned flange 52 along opposite margins. Flange 52 is brazed or welded to an inside surface of the inturned flanges 42. While apertures 30 are located in each turned flange 52 of the impingement plate, it will be appreciated that there is a substantial distance between the nearest aperture 30 and the side wall or edge 40 in the undercut region 44. This large distance diminishes the effectiveness of the impingement cooling.

To minimize the impingement distance, i.e., the distance between the flow exiting the impingement cooling aperture nearest the surface to be cooled, means carried by the nozzle segment having a plurality of apertures therethrough are provided for flowing the cooling medium from the first cavity 24 for impingement cooling the side wall 40 of the segment. Such means may include a series of discrete tubes carrying the cooling medium and preferably include one or more plates 58 disposed in slots 60 formed in the inturned flange 42 of the nozzle side wall 40. The slots 60 are formed at an angle directed toward the side wall 40. A cooling plate 58 is disposed in each of the slots 60. As illustrated in Figures 2 and 3, each plate 58 has a plurality of apertures 64 which extend through the plate between opposite edges. Thus, the plate, as illustrated in Figure 3, is generally rectilinear with length, width and depth dimensions and has apertures 64 formed in the plate between opposite long edges thereof and in a plane defined by the length and width dimensions. As best illustrated in Figure 2, the apertures 64 lie in communication at one end with the cooling medium in the first cavity 24. The apertures along the opposite edge of the plate open into the second cavity 26. Thus, cooling medium flows through the apertures 64 from the first cavity 24 into the second cavity 26. Because the slots 60 are angled toward the side wall 40 and the plates are disposed in the slots at the same angular inclination, it will be appreciated that the cooling medium flow exiting the apertures 64 in the second cavity lies close to the side wall 40. Additionally, because the cooling medium flows along the length of the apertures and their length-to-diameter ratios are substantial, the flow is focused and directed onto the side wall and does not diverge substantially from the flow through the apertures.

To fabricate this improved side wall cooling system, the slots 60 are formed in the inturned flange 42 in the initial casting of the nozzle segment 10. Alternatively, the slots 60 may be machined into the inturned flange 42. After formation of the slots 40, the impingement plate 22 with its turned flanges 52 is placed into the nozzle segment and tacked into position. The impingement plate 22 is then welded into the nozzle. If the impingement plate were to be brazed into the nozzle, the holed plates 58 could be added at this time and brazed along with the impingement plate 22 to the segment. The slots for the hold plates are machined, for example, by EDM, into position prior to or after the impingement plate is in place, depending upon which method is used to connect the impingement plate to the nozzle segment. The apertures through the holed plates are preferably formed prior to the plates being secured into the inturned flange 42. It will be appreciated that the cooling system for the side wall of the nozzle segments described is applicable to both the outer and inner bands of the nozzle segments.

## Claims

1. A nozzle segment (10) for use in a gas turbine, the nozzle segment having outer and inner band portions (12, 14) and at least one vane (16) extending between said band portions, at least one of said band portions including a nozzle wall (18) defining in part a hot gas path through the turbine, a cover (20) radially spaced from said nozzle wall defining a chamber (21) therebetween and an impingement plate (22) disposed in said chamber defining with said cover a first cavity (24) on one side thereof for receiving a cooling medium, said impingement plate on an opposite side thereof defining with said nozzle wall a second cavity (26), said impingement plate having a plurality of apertures (30) therethrough for flowing cooling medium from said first cavity into said second cavity for impingement cooling said nozzle wall, said nozzle segment including a side wall (40) extending generally radially between said nozzle wall (18) and said cover (20); and
**characterised by** means (58) supported by said segment having a plurality of apertures (64) therethrough for flowing the cooling medium from said first cavity to a location in said second cavity for impingement cooling said side wall (40) of said nozzle segment.

2. A nozzle segment according to Claim 1 wherein said cooling medium flowing means includes a plate with said apertures extending through said plate.

3. A nozzle segment according to Claim 1 or 2 wherein said plate has length, width and depth dimensions, said apertures extending generally in a plane defined by said length and width dimensions and between opposite edges of said plate.

4. A nozzle segment according to Claim 1, 2 or 3 wherein said side wall has an inturned flange defining an undercut region adjacent said side wall, a slot (60) opening through and spaced from one another along said inturned flange (42), said plates being disposed in said slot and extending into said undercut region and a plurality of apertures (64) passing through said plate for flowing the cooling medium from said first cavity into said undercut region for impingement cooling said side wall of said nozzle segment.

5. A nozzle segment (10) according to claim 1 wherein said side wall (40) has an inturned flange (42) defining an undercut region (44) adjacent said sidewall, said impingement plate has an edge secured to said inturned flange, said inturned flange has at least one slot therethrough between said first cavity and said undercut region, said means (58) comprising a plate disposed in said slot and extending into said undercut region.

6. A nozzle segment according to Claim 5 wherein said plate has length, width and depth dimensions, said apertures extending generally in a plane defined by said length and width dimensions and between opposite edges of said plate.

7. A nozzle segment according to Claim 5 or 6 including a plurality of slots (60) opening through and spaced from one another along said inturned flange (42), the plurality of plates being disposed in said slots, respectively, and extending into said undercut region and a plurality of apertures (64) passing through each plate for flowing the cooling medium from said first cavity into said undercut region for impingement cooling said side wall of said nozzle segment.

8. A nozzle segment according to any preceding Claim wherein said cover is welded to said nozzle side wall.

9. A nozzle segment according to any one of Claims 5 to 8 wherein exit openings for the apertures in the plate lie closer to the side wall than apertures through the impingement plate.

## Revendications

1. Segment de distributeur (10) pour turbine à gaz, le segment de distributeur ayant des parties de bande extérieure et intérieure (12, 14) et au moins une aube (16) qui s'étend entre lesdites parties de bande, au moins l'une desdites parties de bande incluant une paroi de distributeur (18) qui définit en partie un trajet de gaz chauds dans la turbine, un couvercle (20) espacé radialement par rapport à ladite paroi de distributeur définissant une chambre (21) entre eux et une plaque d'impact (22) disposée dans ladite chambre définissant avec ledit couvercle une première cavité (24) sur un de ses côtés destinée à recevoir un agent de refroidissement, ladite plaque d'impact définissant, sur un côté opposé, avec ladite paroi de distributeur, une deuxième cavité (26), ladite plaque d'impact comportant une pluralité d'ouvertures (30) le traversant pour permettre l'écoulement de l'agent de refroidissement de ladite première cavité à ladite deuxième cavité afin de refroidir par impact ladite paroi de distributeur, ledit segment de distributeur comprenant une paroi latérale (40) qui s'étend globalement radialement entre ladite paroi de distributeur (18) et ledit couvercle (20) ; et
**caractérisé par** un moyen (58) supporté par ledit segment, comportant une pluralité d'ouvertures (64) le traversant pour permettre l'écoulement de l'agent de refroidissement de ladite première cavité à un endroit situé dans ladite deuxième cavité pour refroidir par impact ladite paroi latérale (40) dudit segment de distributeur.

2. Segment de distributeur selon la revendication 1, dans lequel ledit moyen d'écoulement d'agent de refroidissement comporte une plaque dans laquelle sont pratiquées lesdites ouvertures.

3. Segment de distributeur selon la revendication 1 ou 2, dans lequel ladite plaque a des dimensions de longueur, de largeur et de profondeur, lesdites ouvertures s'étendant globalement dans un plan défini par lesdites dimensions de longueur et de largeur et entre les bords opposés de ladite plaque.

4. Segment de distributeur selon la revendication 1, 2 ou 3, dans lequel ladite paroi latérale comporte un rebord tourné vers l'intérieur définissant une région de dégagement voisine de ladite paroi latérale, une fente (60) débouchant dans et espacées l'une de l'autre le long dudit rebord tourné vers l'intérieur (42), lesdites plaques étant disposées dans ladite fente et s'étendant dans ladite région de dégagement et une pluralité d'ouvertures (64) traversant ladite plaque pour permettre l'écoulement de l'agent de refroidissement de ladite première cavité à ladite région de dégagement pour refroidir par impact ladite paroi latérale dudit segment de distributeur.

5. Segment de distributeur (10) selon la revendication 1, dans lequel ladite paroi latérale (40) comporte un rebord tourné vers l'intérieur (42) définissant une région de dégagement (44) voisine de ladite paroi latérale, ladite plaque d'impact a un bord fixé audit rebord tourné vers l'intérieur, ledit rebord tourné vers l'intérieur comporte au moins une fente le traversant entre ladite première cavité et ladite région de dégagement, ledit moyen (58) comprenant une plaque disposée dans ladite fente et s'étendant dans ladite région de dégagement.

6. Segment de distributeur selon la revendication 5, dans lequel ladite plaque a des dimensions de longueur, de largeur et de profondeur, lesdites ouvertures s'étendant globalement dans un plan défini par lesdites dimensions de longueur et de largeur et entre les bords opposés de ladite plaque.

7. Segment de distributeur selon la revendication 5 ou 6, comprenant une pluralité de fentes (60) débouchant dans et espacées les unes des autres le long dudit rebord tourné vers l'intérieur (42), la pluralité de plaques étant disposées dans lesdites fentes, respectivement, et s'étendant dans ladite région de dégagement et une pluralité d'ouvertures (64) traversant chaque plaque pour permettre l'écoulement de l'agent de refroidissement de ladite première cavité à ladite région de dégagement pour refroidir par impact ladite paroi latérale dudit segment de distributeur.

8. Segment de distributeur selon l'une quelconque des revendications précédentes, dans lequel ledit couvercle est soudé à ladite paroi latérale du distributeur.

9. Segment de distributeur selon l'une quelconque des revendications 5 à 8, dans lequel des orifices de sortie pour les ouvertures de la plaque se trouvent plus près de la paroi latérale que les ouvertures pratiquées dans la plaque d'impact.

## Patentansprüche

1. Düsensegment (10) zur Verwendung in einer Gasturbine, wobei das Düsensegment äußere und innere Bandabschnitte (12, 14) und wenigstens eine Leitschaufel (16) aufweist, die sich zwischen den Bandabschnitten erstreckt, wobei wenigstens einer der Bandabschnitte eine Düsenwand (18) enthält, die abschnittsweise einen Heißgasweg durch die Turbine festlegt, wobei von der Düsenwand unter Festlegung einer Kammer (21) eine Abdeckung (20) radial beabstandet ist, und mit einer Prallplatte (22), die in der Kammer angeordnet ist und mit der Abdeckung ein erstes Volumen (24) an einer Seite derselben definiert, um Kühlmedium aufzunehmen, wobei die Prallplatte an einer gegenüber liegenden Seite derselben mit der Düsenwand ein zweites Volumen (26) definiert, wobei die Prallplatte eine Anzahl von Durchgangsöffnungen (30) aufweist, um Kühlmedium aus dem ersten Volumen zur Prallkühlung der Düsenwand in das zweite Volumen fließen zu lassen, wobei das Düsensegment eine Seitenwand (40) aufweist, die sich zwischen der Düsenwand (18) und der Abdeckung (20) im Wesentlichen radial erstreckt und
charakterisiert durch Mittel (58), die von dem Segment getragen sind und eine Anzahl von Durchgangsöffnungen (64) beinhalten, um Kühlmedium aus dem ersten Volumen zur Prallkühlung der Seitenwand (40) des Düsensegments an eine Stelle des zweiten Volumens fließen zu lassen.

2. Düsensegment nach Anspruch 1, bei dem zu dem Kühlmediumleitmittel eine Platte gehört, wobei sich die Öffnungen durch diese Platte erstrecken.

3. Düsensegment nach Anspruch 1 oder 2, bei dem die Platte eine Längen-, Breiten- und Tiefendimension aufweist, wobei sich die Öffnungen im Wesentlichen in einer durch die Längen- und Breitendimensionen festgelegten Ebene sowie zwischen gegenüber liegenden Kanten der Platte erstrecken.

4. Düsensegment nach Anspruch 1, 2 oder 3, bei dem die Seitenwand einen einwärts gekehrten Rand aufweist, der einen der Seitenwand benachbarten Hinterschnittbereich definiert, mit einem Schlitz (60), der sich hindurchführend öffnet und entlang des einwärts gekehrten Rands (42) von diesem beabstandet ist, wobei die Platten in dem Schlitz angeordnet sind und sich in den Hinterschnittbereich erstrecken, wobei eine Vielzahl von Öffnungen (64) durch die Platte führt, um das Kühlmedium aus dem ersten Volumen zur Prallkühlung der Seitenwand des Düsensegments in den Hinterschnittbereich zu leiten.

5. Düsensegment (10) nach Anspruch 1, bei dem die Seitenwand (40) einen einwärts gekehrten Rand (42) aufweist, der einen der Seitenwand benachbarten Hinterschnittbereich (44) festlegt, wobei die Prallplatte eine an dem einwärts gekehrten Rand gesicherte Kante aufweist, wobei der einwärts gekehrte Rand zwischen dem ersten Volumen und dem zweiten Volumen wenigstens einen hindurchführenden Schlitz aufweist, wobei das Mittel (58) eine Platte umfasst, die in dem Schlitz angeordnet ist und sich in den Hinterschnittbereich hinein erstreckt.

6. Düsensegment nach Anspruch 5, bei dem die Platte Längen-, Breiten- und Tiefendimensionen aufweist, wobei sich die Öffnungen im Wesentlichen in einer durch die Breiten- und Längendimensionen definierten Ebene sowie zwischen gegenüber liegenden Kanten der Platte erstrecken.

7. Düsensegment nach Anspruch 5 oder 6 mit einer Anzahl von durchführend offenen Schlitzen (60), die von einander entlang des einwärts gekehrten Rands (42) beabstandet sind, wobei die Anzahl von Platten in den Schlitzen entsprechend angeordnet ist und sich in den Hinterschnittbereich erstreckt, wobei eine Anzahl von Öffnungen (64) vorgesehen ist, die durch jede Platte führen, um Kühlmedium aus dem ersten Volumen zur Prallkühlung der Seitenwand des Düsensegments in den Hinterschnittbereich fließen zu lassen.

8. Düsensegment nach einem der vorausgehenden Ansprüche, wobei die Abdeckung mit der Düsenseitenwand verschweißt ist.

9. Düsensegment nach einem der Ansprüche 5 bis 8, wobei die Ausgangsöffnungen für die Öffnungen in der Platte dichter an der Seitenwand liegen als durch die Prallplatte führende Öffnungen.
